# EUROPEAN PATENT APPLICATION

(11) **EP 1 668 984 A1**
(43) Date of publication of application: **14.06.2006**
(21) Application number: 05381053.7
(22) Date of filing: 11.11.2005
(51) Int. Cl.: A01N 43/56, A01P 7/02, A01P 7/04, A01N 61/00, A01N 57/00, A01N 53/00, A01N 47/34, A01N 43/90, A01N 43/54, A01N 43/40, A01N 37/52

(54) **Synergistic parasiticidal compositions comprising a 1-phenyl-pyrazole**

(30) Priority: 12.11.2004 UY 2861704
(71) Applicant: POPLEY PHARMA LTD., London WCZA 3LJ (GB)
(72) Inventor: Leáñiz Bregante, Rafael, WCZA 3LJ, LONDON (GB)
(74) Representative: Esteban Perez-Serrano, Maria Isabel

(57) **Abstract**

Synergistic parasiticidal compositions comprising one or more 1-phenyl-pyrazole derivatives of formula (I) and one or more associated pesticidal compounds selected from macrocyclic lactones, neonicotinoids, IGR, pyrethroids, pyrimidines, organophosphates, or amitraz. Use of said compositions for the control of insects, arachnida, and worms.

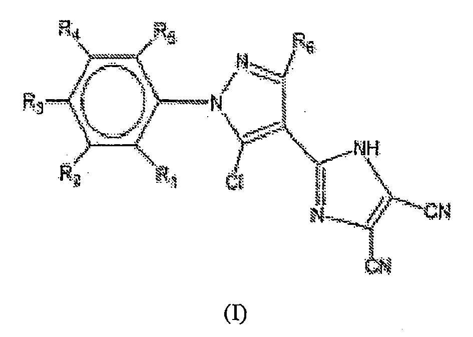

## Description

### Field of the Invention

This application describes an association of compounds, composed of phenyl pyrazoles and other pesticides, with synergic activity against insects, arachnida and worms which parasite mammals.

### Background of the Invention

Phenyl pyrazoles of the present application, possess insecticide activity and were generally described in patent US109012 (Willis et al.), where the same are taught as insecticides, acaracides and endo-parasiticides; likewise, the same where mentioned in the application FR0304806 (Evultis), in which a new synthesis method of the same is mentioned. The compounds associated are those known by experts, which have been described in several publications, such as "The Pesticide Manual" Ed. CDS Tomlin, 11th edition and several patents or patent applications.

Nevertheless, association of phenyl pyrazoles of the application with the other compounds already mentioned has not yet been described.

### Summarized Description of the Invention

Phenyl pyrazoles of the invention have the formula (I): 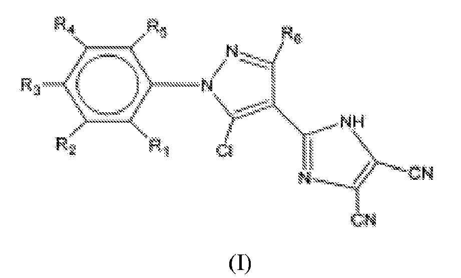 Wherein:
- R₁ to R₅ represent separately hydrogen, halogen or a -(X)ₙ-R₇ radical, wherein X represents a group selected among oxygen, sulfur, sulfinyl or sulfonyl radical, n is 0 or 1 and R₇ is an alkyl C₁-C₄ radical.
- R₆ represents an alkyl C₁-C₆ radical.

Compounds of formula (I) may be associated with the following:
- Macrocyclic lactones.
- Neonicotinoids and derivates.
- IGR.
- Piretroids.
- Pyrimidines and derivates.
- Organophosphates.
- Amitraz

The association of compounds of formula (I) with the pesticides mentioned above, produces a synergic effect on insects, arachnida and worms (especially fleas, ticks, flies and mosquitoes) which attack mammals. Thus, lower doses of each compound or in the same dose may be used, but with a longer and stronger effect.

The object of the present invention is a synergic composition, which contains one or more compounds of formula (I) together with one or more associated compounds, included in the list mentioned above, the pharmaceutical preparations for the administration thereof and the treatment method against insects, arachnida and worms which includes said compositions.

### Detailed Description of the Invention

The following is established for compounds of formula (I):
- alkyl C₁-C₄ is a linear or branched alkyl, saturated o unsaturated, with 1 to 4 carbon atoms which in turn may be replaced by one or more equal or different halogen atoms.
- alkyl C₁-C₆ is a linear or branched alkyl, saturated o unsaturated, with 1 to 4 carbon atoms which in turn may be replaced by one or more equal or different halogen atoms.
- Halogen is fluorine, chlorine, bromine or iodine.

Preferred compounds of formula (I) are the following:
5-chlorine-1-(2, 6-dichlorine-4-trifluoromethylphenyl)-4-(4,5-dicyan-1H-imidazol-2-il)-3-methyl-1H-pyrazole.
5-chlorine-1-(2, 6-dichlorine-4-trifluoromethylphenyl)-4-(4,5-dicyan-1H-imidazol-2-il)-3-isopropyl-1H-pyrazole.
5-chlorine-1-(2,6-dichlorine-4-trifluoromethylphenyl)-4-(4,5-dicyan-1H-imidazol-2-il)-3-ethyl-1H-pyrazole.
5-chlorine-1-(2,6-dichlorine-4-trifluoromethylphenyl)-4-(4,5-dicyan-1H-imidazol-2-il)-3-tercibutyl-1H-pyrazole.

Among the above mentioned, especially preferred is 5-chlorine-1-(2,6-dichlorine-4-trifluoromethylphenyl)-4-(4,5-dicyan-1H-imidazol-2-il)-3-methyl-1H-pyrazole.

The compounds of formula (I) may be prepared as described in patent US5109012.

Formulations may contain one or more compounds of formula (I) and may in turn associate with one ore more pesticides of the groups mentioned herein below. As mentioned, all the pesticides associated to the compounds of formula (I) are known, and are described in "The Pesticide Manual"; Nevertheless, some of them are described with the number of patent or patent application where the same were described between brackets. Associated compounds may be:
- Macrocyclic lactones - In an exemplary yet not limiting manner: Ivermectin (EP0089202), emamectin (EP0089202), milbemycin, moxidectin, selamectin doramectin, spinosad (mixture of spinosyn A and spinosyn D).
- Neonicotinoids - In an exemplary yet not limiting manner: Nitenpyram (EP0302389), imidacloprid, thiacloprid, acetamiprid.
- IGR - In an exemplary yet not limiting manner: Lufenuron (EP0179082), teflubenzuron (EP0052833), triflumuron (DE2601780), novaluron, fenoxicarb (EP0004334), methoprene.
- Piretroids - In an exemplary yet not limiting manner: Betacifluthrin (EP0206149), cipermethrin (DE2326077), acrinathrin (EP0048186), alpha-cipermethrin (EP0067461), deltamethrin (DE2326077), esfenvalerate (DE2737297), permethrin (DE2326077), etofenprox (DE3117510), fenpropatrin (DE2231312), fenvalerate (DE2335347), tralomethrin (DE2742546), flucitrinate (DE2757066), lambda-cyhalothrin (EP0106469), tau-fluvalinate (EP0038617), zeta-cypermethrin (EP0026542)
- Pyrimidines - In an exemplary yet not limiting manner: pirimidifen (EP0196524), pirimicarb (GB 1181657).
- Organophosphates - In an exemplary yet not limiting manner: propenophos (DE2249402), chlorpiriphos (US3244586), malathion (US2578562), phentoate (GB834814), phorate (US2586655), trichlorphon (US2701255), parathion (DE814152).
- Amitraz (DE2061132)

Associations may include one or more compounds of formula (I), together with one or more compounds of different groups mentioned above and/or of the same group. The compounds of the seven groups mentioned above, are named in the associated compounds of the specification.

The preferred ranges for the compound mix of formula (I): associated compounds are 10:1 1 to 1:10 weight (m/m). In case of compositions with one or more compounds of formula (I) and one or more associated compounds, the respective values include the addition of all the used associated compounds.

The combinations of the compounds of formula (I) and associated compounds, are useful in the treatment of insects, arachnida and worms (especially fleas, ticks, flies and mosquitoes) particularly in mammals, especially in domestic animals and more especially in cats and dogs.

The associations described are capable of destroying insects, arachnida and worms in all its stages (eggs, larvae, pupa, adults). The pests to be destroyed are particularly among the following - although not exclusively:
- Order Siphonaptera: Examples: *Xenopsylla cheopsis, Pulex irritans, Ctenophalides spp.* (especially *Ctenocephalides felis* and *Ctenocephalides canis*).
- Arachnida class: Examples: *Boophilus spp., Amblyomma spp., Anocentor spp., Dermacentor spp., Ixodes spp., Haemaphisalis spp., Hyalomma spp., Rhipicentor spp., Rhipicephalus spp., Argas spp., Ornithodoros spp., Otobius spp..*
   Very especially, *Dermacentor variabilis, Dermacentor andersoni, Ixodes ricinus, Ixodes scapularis, Amblyomma americanum, Ripicephalus sanguineus.-Order* Diptera: Examples: *Aedes spp., Anopheles spp., Culex spp., Musca spp..*

Particularly preferred are the compositions with one or more compounds of formula (I) together with one or more neonicotinoids, one or more macrocyclic lactones and one or more IGR.

Combinations of the compound of formula (I) and associated compounds may be formulated in any of the forms that may be useful for the treatment of the infected mammal. Particularly, although not necessarily exclusively, the same may be formulated as solutions, emulsions, soluble powders, insoluble powders, suspensions, ointments, sprays, capsules, tablets, extrusion compositions with palate aids, oral intake compositions and even as collar. Formulations may be prepared to be applied orally, parenterally, or cutaneously (pour-on or spot-on). For large animals (for example: bovines, ovines or equines), all formulations are of interest; in case of pets (especially cats and dogs) it is also possible to use any composition, but oral administration formulations are preferred. The advantages of oral administration formulations compared to pour-on or spot on formulations are the following:
- Easier administration with an appealing formulation (for example, by a palate aid).
- They leave no residues on skin; therefore they are safer for children who are usually in contact with pets.
- The skin of the animal does not remain greasy.
- There is no risk of bad absorption, decrease of efficacy by the effect of sunlight, or decrease in absorption by rain or bath.
- In case of package losses, there is no risk of skin absorption by the owner of the animal.
- Oral dose may be administered in a more precise manner than pour-on or spot-on dose, and there is no risk associated with leaking of the product, or the product remaining in the bottom of the package.

Likewise, the formulations for oral administration are generally easier to apply for the owner of the cat or dog compared to the formulations which are administered by injection.

Therefore, the preferred formulations to be applied directly on cats or dogs are those to be applied orally.

Compositions may also be prepared to be applied in the environments and places in which the animal lives, especially in those areas where it sleeps. To these purposes, they may use both compositions, as powder or as spray. The compositions as spray are preferred in this case, because they leave no traces of residues in carpets or moquettes.

The formulations are elaborated with pharmaceutically accepted products and known in the field of veterinary medicine, such as liquid solvents, solid carriers, surfactants, emulsifiers, dispersants, etc., all of the well-known. Among the products that may be used, the following may be listed as an example:
- Suitable carriers. - For example, sugars (lactose, sucrose, mannitol, sorbitol, cellulose preparations) and/or calcium phosphates (tricalcium phosphate or calcium monoacid phosphate).
- Binders- For example, starch paste (corn, rice, and potato), gelatine, tragacanth, and methylcellulose.
- Desintegrants.- For example, starch carboximethyl, cross-linked polyvinylpirrolidone, agar, alginic acid or salts thereof (especially sodium salts).
- Lubricants.- For example, silicic acid, talcum, stearic acid, polyethylene glycol.
- Antioxidant agents. - For example, butylhydroxitoluene (BHT), butylhydroxianisol (BHA).

Other products may also be added, such as viscosity regulators, thickeners, antifoaming, stabilizers, appetizing substances or pigments.

Oral administration formulations may be prepared as tablets, capsules, or may be administered directly or combined with the animal's food or water. They may also be administered as extrusion particles (for example, granules or pellets), cookies, drops or compositions to be administered together with the animal's food or water. Compositions to be used with this method may contain 0.1 % to 99% weight, with preference 0.1 % to 95% weight of formula (I) + associated compounds and 99.9% to 1% weight, with preference 99.9% to 5% weight of solid or liquid adjuvant. Formulations may also contain up to 25% weight of a non toxic surfactant.

Compositions as tablets or extruded particles, may be included with a palate aid, these are those products which allow a more attractive ingestion of the pharmaceutical form by the animal. These palate aids may include any substance which provides the food with the desired flavour, such as beef, fish, chicken, turkey or liver. For tablets for dogs the palate aids preferred are those which taste like meat, (both beef and chicken) while for tablets for cats, the palate aids preferred are those which taste like fish (for instance, tuna fish) or chicken.

Preferably, the commercial products are formulated as concentrated forms; those to be consumed by the final consumer are diluted forms.

The surfactants employed in the invention are those known by the expert. Anionic compounds may be employed, such as carboxilates (especially metallic carboxilates of fatty acids), N-acylsarcosinate, mono and diesters of phosphoric acids with etoxilates of fatty alcohols or salts of said esters, fatty alcohols sulphats (ex: sodium dodecilsulphate), etoxilated fatty alcohols sulphates, lignine sulphonates, petroleum sulphonates, alkylarylsulphonates (ex: bencensulphonates), complex sulphonates (ex: amide sulphonates). Also may be employed fatty acid esters, fatty alcohols, fatty acid amides, phenols substituted with long chain alkyls or alkenyls substituted with ethylene oxide, fatty esters of polyhydric alcohol ethers (ex. fatty acid esters, and polyethylsorbitan), copolymers of ethylene oxide and propilene oxide, acetylenic glycols (ex: 2,4,7,9-tetramethyl-5-decyn-4,7-diol) or ethoxilated acetylenic glycols. Cationic surfactants may also be used, such as an alyphatic mono-, di-, or polyamine (ex: acetate, naphenate or oleate), an oxygen containing amine such as amine oxide or polyoxiethylenalkylamine, an amine cross-linked to an amide (prepared by condensation of a carboxylic acid with di- or poli-amine) or a salt of quaternary ammonia.

When the formulation is a tablet, the core of the tablet may contain coatings gastric juice resistant, among others, solutions of sugars, among which may be included arabic gum, talcum, polyvinylpirrolidone, polyethylenglycol and/or titanium dioxide. The coatings gastric juice resistant incluye solutions of preparations suitable, including cellulose, such as phtalate of acetylcellulose or phthalate of hydroxipropylcellulose.

Formulations administered orally may also be prepared as gelatine hard tablets and soft tablets, composed of gelatine and a plasticizer such as gylcerol or sorbitol.

Hard capsules may include the active ingredient as granules, for example mixed with lactose, binders such as starch and/or lubricants such as talcum or magnesium stearate. In soft tablets, the active ingredients are preferably dissolved or suspended in suitable liquids such as fatty acids, paraffin oils or polyethylenglycol liquids.

The two kinds of capsules may include suitable stabilizers.

Another kind of oral dosage may be carried out by food that the animal finds attractive, in which the active ingredients are absorbed or integrated to the filling. As an example of the above mentioned, unfilled pastries tasting as meat, unfilled pebbles covered with sugar, unfilled chocolate bars, which are filled with the active ingredient may be included.

To be administered parenterally aqueous solutions with active ingredients soluble in water (ex: salts soluble in water) are preferred. Also solutions of active ingredients in a wide sense, such as suitable oily injection suspensions with suitable solvents or lypophylic vehicles, such as oils (sesame oils), or synthetic esters of fatty acids (ex: ethyl oleate) or triglycerids or triglyclerids or aqueous injection suspensions with agents that increase viscosity (ex: sodium carboxymethylcellulose, sorbitol and/or dextrane). The rate of compounds or compounds of formula (I) + compound or compounds associated in these formulations preferably is between 1% and 90% weight (m/m).

Injection formulations may contain suitable stabilizers. Such formulations may be used in cats and dogs, but preferably the same are applied in large animals.

Topical applications may be carried out by a variety of methods, such as sprinkling, spraying, shampoo, ointments, pour-on or spot-on. In spay, pour-on or spot-on applications, suitable organic solvents may be employed such as ketoalcohols, esters, aromatic or aliphatic hydrocarbons. Particularly, for pour-on, spot-on topical applications, concentrated emulsifiers may be prepared by dissolving or dispersing about 10% to 75% weight of active components in a suitable solvent or carrier such as a petroleum distillate and combining the whole with about 10% of an emulsifier such as polyoxyethylene derivates and mixtures of alkylarylsulphonates.

For powder or concentrate administration, active ingredients are mixed with suitable solid diluents, such as attapulgite, kaolin, diatomaceous earth, aluminium silicate, tricalcium phosphate, magnesium silicate, bentonite, ground corn husk, pulverized cork, corn starch, silicon dioxide (such as Aerosil: Silicon dioxide microfine particle). Concentrates may be prepared by dissolving compounds of formula (I) and compounds associated to solvents such as acetone or xylene and spraying the solution in the solid carrier.

Solid compositions shaped as powders or granules may also be prepared by impregnating solid diluents in a solution of compounds of formula (I) and compounds associated to volatile solvents, evaporating solvents, and when required, grinding the product until a powder is obtained. If desired, products may be ground or compact and reduced into granules, pellets or briquettes.

Powders may contain from 1% to 15% weight of compounds of formula (I) + associated compounds, while concentrates may contain from 16% to 85% weight of compounds of formula (I) + associated compounds.

Wetting powders are prepared as powders or concentrates, except for the addition of 5% to 10% weight of surfactant and 5% to 10% of dispersing agent, and, eventually, emulsifiers or colouring agents. The agents used as surfactants, dispersing agents and emulsifiers in wetting powders may be ionic or non ionic agents. For instance, sulphoricinoleates, derivates of quaternary ammonium or condensed products of ethylene oxide with nonilphenol and octilphenol (for instance, Ethylan BCP, nonilphenol condensate/ethylene oxide with 9 moles of ethylene oxide per mol of phenol). Wetting Powders may be treated with water immediately before they are used to provide adequate suspensions for its application.

Ointments may be prepared using vegetable oils or synthetic esters of fatty acids, together with an inert base such as soft paraffin. A composition of this invention is preferably uniformly distributed in all the mixed solution or suspension. Ointments may also be prepared from the dilution of emulsifying concentrates in a spreading base.

Sprays may include a solution of mixture of components in whatever solvent or mixture of solvents which are suitable, whether organic or aqueous. Particularly preferred is the mixture of components in an organic solvent or an emulsion of the solution in an organic solvent. The selected solvents to dissolve the mixture of components may be one or more of the following: kerosene, ketones, alcohols, xylene, naphta and other known solvents. The concentration of emulsifiers may vary in a wide range and they are preferably non ionic surfactants or mixtures of non ionic and anionic surfactants. Non ionic surfactants may include alkyl phenols or alcohol polyalkylene ethers. Anionic compounds include salts of alkylarylsulphonic acids.
The aerosol sprays may be prepared as a simple solution of active ingredients in the aerosol propeller and a cosolvent such as halogenated alcane. A concentrated which includes a propanol solution of the active ingredient and a propelling mixture of propane: butane 4:1 volume may also be used, in which the propelling agent makes up 80% of the volume and the concentrate the remaining 20%.

The proportion of compound or compounds of formula (I) + compound or compounds associated to the spray may range from 0.01% to 2% weight of the total composition.

To apply the active compounds in collars whatever known formulation method may be carried out.

Specially preferred is the manufacture of the collar with the active compounds from thermoplastic resins, plasticizers and active ingredients, to which other ingredients may be added such as stabilizers, lubricants or colouring agents. Resins make up 35% to 75%, preferably 40% to 70% weight of the total composition; the plasticizer makes up 5% to 50%, preferably 10% to 50% weight of the total composition; other ingredients make up no more than 15% weight of the total composition.

Ingredients are mixed and processed by known methods and techniques of dry extrusion of the mixture or moulding by injection to produce a molten solid of desired shape, which may in turn be moulded in rectangular shape and with holes to obtain a collar for cats and dogs to use.

The following may be used as resins: polyvinyl resins such as polyvinyl halides (such as polyvinylchloride (PVC)), polymethacrylate esthers such as polymethylacrylate and polyethylmethacrylate, polymers of vinyl compounds (such as polystyrene or polyvinylbencene), polyoleofines (such as polypropylene, polyethylene, copolymers of ethylene and propylene), polyvinyl acetals (such as polyvinylbutiral), polyurethanes.

As plasticizers phosphoric acid esters may be used, such as tricresilphosphate, esthers of phthalic acid such as dioctilphtalate or diphenylphtalate, esters of adipic acid, azelaic acid, maleic acid, ricnoleic acid, myristic acid, palmitic acid, oleic acid, sebacic acid, stearic acid, epoxidized soybean oils and polymeric plasticizers.

Suitable stabilizers are antioxidants and agents which protect resin from ultraviolet radiation and inadequate degradation during extrusion process, such as epoxidized soybean oils (also useful as plasticizer), stearates including stearic acids and polyethylene of low molecular weight. Among antioxidant agents phenolic antioxidants which hydroxyl group with one or more alkyl groups in positions 2 and/or 4 and/o 6 may be mentioned (such as butylhydroxytoluene, butylhydroxyanisol).

With this composition the active compound particles, as micronized powder may be released permanently on the animal with its natural movements, in this way an extended area of the skin of the animal becomes in contact with the pesticide.

Another possible shape formulation is as earrings. Earrings may be manufactured from thermoplastic or thermally stable polymeric materials, plasticizers and optionally other materials known by the field expert, such as colouring agents, lubricants, filling agents, antioxidants, UV stabilizers.

Pesticide concentration may be from 0,5% to 50, preferably from 1% to 40% weight, more preferably in a concentration range from 5% to 30% weight of the total composition. Thermoplastic material may be used in quantities of 30% to 70%, preferably from 40% to 60%, and more preferably from 45% to 55% of the total composition. The plasticizer may be used in quantities from 1% to 30%, preferably from 5% to 25% weight of the total composition. In case there are other materials present, the same are in a total quantity that does not supersede 10% weight of the total concentration.

The components used for the formulation as earrings resemble those mentioned in the formulation with the shape of a collar and are processed by extrusion techniques and thermal modelling well known by the field expert.

The compounds of formula (I) and the associated compounds may also be supplied in a kit, in which each one of the compounds of formula (I) and the associated compound are in separate vessels and may be combined before being used, to be applied jointly. The compounds of the kit may be conveniently prepared for their oral, topical or parenteral application.

The compounds of formula (I) and associated compounds are jointly administered in a 0.01 mg to 800 mg dose per kg of body weight, preferably from 0.1 mg to 200 mg per kg of body weight and especially from 0.5 mg to 30 mg of body weight. The values for the compounds of formula (I) and associated compounds refer to the total value, therefore, they correspond to the addition of the amounts of all the compounds of formula (I) and associated compounds, if there is more than one.

The total dose varies for the same composition of compounds of formula (I) and associated compounds for each animal species and with the animal weight and constitution.

Depending on the formulations, the kind of animal and the objectives of the treatment, doses may be administered with different frequency (once a week, once a month, or with an even lower frequency).

For cats and dogs, preferably the dose is administered only once a week or once a month, depending on the formulation and general state of the animal, either by topic, oral or parental administration. When the associated compounds are organophosphates, applications are carried out only topically or in the area where the animal is usually found. When the associated compounds are organophosphates, the use of formulation is preferred for animals that are not pets; the preferred dose in these cases is 1 to 32 mg/kg of compound or compounds of formula (I) and 0.5 to 20 mg/kg of compound or organophosphate compounds (if more than one compound is used, the values represent the total amount that has been used).

In case of a single weekly application, preferably the treatment with compounds of formula (I) and associated compounds not organophosphates is carried out by a weekly application of 1-32 mg/kg of compound or compounds of formula (I) and 1-100 mg/kg when the associated compounds are neonicotinoids, 0.5 mcg/kg to 40 mg/kg (1mcg = 1 microgram) when the same are Macrocyclic lactones (except Spinosad), the amount applied is 2 to 40 mg/kg when it is IGR, 1 to 100 mg/kg when it is piretroids, pyrimidines or amitraz and 1 to 100 mg/kg when it is Spinosad.

In case of weekly dose, especially preferred is to apply from 1 to 20 mg/kg of compound or compounds of formula (I) and 2 to 20 mg/kg when the associated compound is a neonicotinoids, 1 mcg/kg to 4 mg/kg when it is a macrocyclic lactone (except Spinosad, 5 to 20 mg/kg when it is IGR, a piretroide, a pyrimidine or amitraz, 10 to 60 mg/kg when it is Spinosad.

In case of a single weekly application, preferably the treatment with compounds of formula (I) and associated compounds not organophosphates is carried out by a monthly initial single application of 2-60mg/kg of compound or compounds of formula (I) and 2-200mg/kg when the associated compounds are neonicotinoids, 5 mcg/kg to 60 mg/kg when the same are macrocyclic lactones (except Spinosad), the amount applied is 4 to 40 mg/kg when it is IGR, 2 to 160 mg/kg when it is piretroids, pyrimidines or amitraz and 5 to 200 mg/kg when it is Spinosad.

In case of a single monthly dose, it is especially preferred an initial application of 4 to 40 mg/kg of compound of formula (I), 4 to 100 mg/kg of neonicotinoids, 7mcg/kg-30mg/kg of macrocyclic lactones (excluding Spinosad), 8-40mg/kg when it is piretroids IGR, pyrimidines or amitraz, 20-140mg/kg when it is Spinosad.

If more than one compound of formula (I) and/or more than one compound associated to the same group is used, the quantities correspond to total quantities.

The following are examples of possible formulations, but they are in no way limiting of the scope of the invention.

### PREPARATION OF ACTIVE COMPONENTS

Compounds of formula (I) are mixed with associated compounds to yield active components of the following compositions:
Active component 1:

| | |
|---|---|
| 5-chlor-1-(2.6-dichlo-4-trifluoromethylphenyl)-4-(4.5-dicyan-1H-imidazol-2-yl)-3-methyl-1H-pyrazol: Nitenpiram | 1:4 |

Active component 2:

| | |
|---|---|
| 5-chlor-1-(2.6-dichlo-4-trifluoromethylphenyl)-4-(4.5-dicyan-1H-imidazol-2-yl)-3-methyl-1H-pyrazol: Moxidectin | 2:5 |

Active component 3:

| | |
|---|---|
| 5-chlor-1-(2.6-dichlo-4-trifluoromethylphenyl)-4-(4.5-dicyan-1H-imidazol-2-yl)-3-methyl-1H-pyrazol: Lufenuron | 1:9 |

The composition rates mentioned above are weight rates (w:w)

### EXAMPLES OF FORMULATIONS

### EXAMPLE 1: Tablets

It is possible to produce tablets with 25 mg of active component. The formulation may be produced according to the known methods.

| | |
|---|---|
| Active component 1: | 25 g |
| Lactose | 95.7 g |
| Chicken palate aid | 5.0 g |
| Wheat starch | 7.5 g |
| Polyethylenglycol (MW =6000) | 5.0 g |
| Talcum | 5.0 g |
| Magnesium stearate | 1.8 g |
| Demineralized water | sq |

Al solid ingredients are firstly pushed through a 0.6 mesh sieve; then the active component, lactose, palate aid, talcum and half the starch are mixed together. The other starch half is suspended in 40 ml of water and the suspension is added to a boiling solution of polyethylenglycol in 100 ml of water. The resulting starch base is added to the main mix and it is granulated, if necessary by addition of water. The granulate is dried overnight at 35°C, it is pushed through a 1.2 mm mesh sieve, it is mixed with magnesium stearate and it is compressed into 6 mm diameter biconcave tablets.

### EXAMPLE 2: Tablets

Another formulation, to produce 10000 tablets containing 20 mg of active component is one of the following:

| | |
|---|---|
| Active component 1: | 200.0 g |
| Lactose | 286.0 g |
| Tuna fish palate aid | 10.0 g |
| Potato starch | 269.7 g |
| Estearic acid | 10.0g |
| Talcum | 200.0 g |
| Magnesium estereate | 2.5 g |
| Colloidal silicate | 30.0 g |
| Ethanol sq | |

The mixture of active ingredient, lactose, palate aid and 194.70 g of potato starch is wetted with the ethanolic solution of estearic acid and is granulated through a sieve. After drying the remaining potato starch, talcum, magnesium stearate and colloidal silica are added, are mixed with the previous mixture and are compressed to form tablets of 0.1 g which may be scored for a finer adjustment of the dose.

### EXAMPLE 3: Capsules

It is possible to produce 1000 capsules with 25 mg of active component each.

| | |
|---|---|
| Active component 2: | 25.0 g |
| Lactose | |
| Gelatine | 2.0 g |
| Corn Starch | 10.0 g |
| Talcum | 15.0 g |
| Water | sq |

The active component is mixed with lactose and the mixture is uniformly wetted with an aqueous solution of gelatine and granulated through a sieve with a mesh 1.2 to 1.5 mm wide. The granulated is then mixed with dried corn starch and with talcum and 300 mg of resulting portions are introduced in capsules of hard gelatine.

### EXAMPLE 4: Emulsifying concentrate

In the following 100 g of emulsifying concentrate are prepared, according to:

| | |
|---|---|
| Active component 3: | 20.0 g |
| Calcium dodecilbencenesulphonate | 20.0 g |
| Xylene | 60.0g |

The active component is mixed with calcium dodecilbencenesulphonate and then the mixture is in turn mixed with xylene until the solution is completely homogenous. By diluting this concentrate with water, an emulsion of the desired concentration may be obtained.

### EXAMPLE 5: Wetting powder

| | |
|---|---|
| Active component 3: | 25.0g |
| Sodium laurel sulphate | 1.0g |
| Colloidal silica | 3.0g |
| Urea | 71.0g |

Components are mixed, and the mixture obtained is finely pulverized in a suitable mill.

### EXAMPLE 6: Wetting powder

100 g of wetting powder are prepared:

| | |
|---|---|
| Active component 1: | 50g |
| BCP Ethylan | 5g |
| Aerosil | 5g |
| Celite PF | 40g |

Ethylan is absorbed in Aerosil, it is mixed with other ingredients and the mixture is ground in a hammer mill to produce the wetting powder, which may be diluted with water at a concentration of 0.001% to 2% weight, of active components.

### EXAMPLE 7: Gels

A gel containing 2 mg of active component per gram of gel is obtained.

| | |
|---|---|
| Active component 2: | 0.5g |
| Kkippfish liver oil | 12.5g |
| Corn oil | 124.5g |
| Meat peptone | 2.5g |
| Molasses | 5.0g |
| Glucose | 12.5g |
| Sodium benzoate | 5.0g |
| Methylcellulose | 12.5g |
| Demineralized water | 75.0g |

The active component is diluted in the oily phase. Glucose, peptone, sodium benzoate and molasses are dissolved in demineralised water and heated at 60°C, in said solution is mixed methylcellulose to form a gel, which in turn is mixed with the oily phase. The gel is filled in squeezing plastic flexible tubes, which are sealed by a fold and a cap.

Alternatively, the gel may be filled in graduated syringes to provide the desired daily dose. This basic oral dose as a gel may be improved by addition of essential vitamins, minerals and fatty acids, to provide an animal nutritional supplement of simple administration, which in turn shows effective control of ecto-parasites.

### EXAMPLE 8: Dietary supplement

There may be a dietary supplement which provides 1 mg of active component per gram of supplement.

| | |
|---|---|
| Active component 1: | 1.0g |
| Fish oil | 80.0g |
| Borage oil | 20.0 g |
| Sunflower seed oil | 847.9g |
| Chicken flavor | 5.0g |
| BHT | 1.0g |
| Propylenglycol | 20.0 g |
| Zinc Sulphate | 1.0g |
| Tocopherol acetate | 3.0g |
| Inositol | 0.5g |
| Pyridoxine Hydrochloride | 0.1g |
| Vitamin A (palmitate) | 0.1g |
| Biotine | 0.1g |
| Paraben propylmethyl | 0.3g |

All ingredients are dissolved or mixed in oily phase. The liquid supplement is filled in squeezing flexible plastic containers, which are sealed. The administration of dermatological active supplements of fatty acids/vitamins/zinc is especially beneficial for animals suffering from dermatitis by infection with ecto-parasites. The proportion of ingredients of the table may provide 1 mg of active ingredient per gram of dietary supplement.

### EXAMPLE 9: Transdermal gel

A transdermal gel may be prepared which contains 50 mg of active ingredient per gram of gel.

| | |
|---|---|
| Active component 2: | 12.5g |
| Corn oil | 12.5g |
| DMSO | 12.5g |
| BHT | 1.3g |
| Methylcellulose | 5.0g |
| Demineralized water | 206.3g |

The active component is dissolved in the oily phase, to which the remaining excipients are added, and the mixture is prepared into a soft gel of 1000-1200 centipoise of viscosity. The gel is filled in 2 ml aliquot in single dose in flexible plastic tubes which are sealed with heat.

Alternatively, the gel may be filled in graduated syringes to provide the desired relation of dose suitable for topical administration.

### EXAMPLE 10: Pre-mixture for food additive

| | |
|---|---|
| Active component 1: | 0.250g |
| Calcium Phosphate | 4.750g |
| Animal Food | 95g |

The active ingredient and calcium phosphate are mixed, thereafter the mixture is combined with the food to produce an homogenous mixture.

### EXAMPLE 11: Pre-mixture for food additive

Another possible formulation for the pre-mixture for food additives is the following:

| | |
|---|---|
| Active component 1: | 0.40g |
| Aerosil: limestone (1:1) | 5.00g |
| Conventional dry food | 94.6g |

The active ingredient and aerosol: limestone are mixed, thereafter the mixture is combined with the food to produce a homogenous mixture.

### EXAMPLE 12: Solutions to be used as beverage additive

| | |
|---|---|
| 15% | weight of active component 1. |
| 10% | weight of active component 1 in diethylglicol monoethylether. |
| 10% | of active component 1 in polyethylenglycol 300. |
| 5% | weight of active component 1 in glycerol. |

Ingredients are mixed until a solution is obtained.

### EXAMPLE 13: Solution to apply pour-on or parenterally

Solutions to be used as pour-on or converted in solution for parenteral use are herein prepared.

| | |
|---|---|
| Active component 2: | 15% (m/v) |
| Dimethylsulphoxide | Until 100% in volume |

The active compound is dissolved in a portion of DMSO and then more DMSO is added up to the desired volume. The solution may use pour on application.

Another option is to sterilize the solution by filtration through a polytetrafluoroethylen membrane, pore size 0.22 micrometers to be used for parenteral application by injection to an application relation range from 0.01 ml to 0.12 ml by kg of body weight of the animal.

### EXAMPLE 14: Solution to apply pour-on

Solutions are prepared to be used in pour on applications according to the following composition:

| | |
|---|---|
| Active component 2: | 18% (m/v) |
| Isopropylic alcohol | Up to 100% in volume |

By the same procedure the composition pour on of example 13 is prepared.

### EXAMPLE 15: Sprinkling powder

100 g of powder to sprinkle over infected animals and/or over areas where they are usually found were prepared.

| | |
|---|---|
| Active component 1: | 10g |
| Superfine talcum | 90g |

They are prepared by simple mixture of the products.

### EXAMPLE 16: Collar

A collar of the following composition is prepared (all percentages are weight percentages):

| | |
|---|---|
| Active component 1: | 10.0% |
| Polyvinyl chloride | 51.7% |
| Diotiladipate | 35.0% |
| Epoxidized soybean oil | 3.0% |
| Estearic acid | 0.3% |

Polyvinyl chloride, dioctiladipate and epoxidized soybean oil are mixed in a high speed mixer (1800 rpm) until all liquids are absorbed and the resulting mixture flows freely. Active component 1 and estearic acid is added and briefly mixed. The mixture is taken to an extrusion device and extruded in a water bath to provide a one inch band, which is dried at room temperature.

### EXAMPLE 17: Collar

A collar of the following composition is prepared (all percentages are weight percentages):

| | |
|---|---|
| Active component 2: | 5.0% |
| Polyvinyl chloride | 55.7% |
| Dioctiladipate | 35.0% |
| Epoxidized soybean oil | 4.0% |
| Estearic acid | 0.3% |

It is prepared following the method described in the previous example.

### EXAMPLE 18: Earrings

Earrings of the following composition are prepared (all percentages are weight percentages):

| | |
|---|---|
| Active component 2: | 30% |
| Polyvinyl chloride | 54.7% |
| Epoxidized soybean oil | 12.5% |
| Titanium Dioxide | 0.5% |
| Butylhydroxitoluene | 1.3 % |
| Silicon dioxide | 1% |

PVC and epoxized soybean oil is mixed at 80°C. Active component 2 is added and mixed during two hours. The mixture is cooled at 20°C and BHT, silicon dioxide and titanium dioxide are added. Afterwards the earrings are produced by passing the mixture through an extrusion procedure by moulding at 121°C, to produce earrings weighting approximately 15 g each.

### EXAMPLE 19: Extrude Granulate

The extruded granulate is prepared from the following composition:

| | |
|---|---|
| Active component 3: | 10% |
| Sodium lignosulphonate | 2% |
| Carboximethylcellulose | 1% |
| Kaolin | 87% |

The active component 3 is mixed with adjuvants and is pulverized. The obtained mixture is wetted with water, extruded and dried in air draft.

Having described the application, the following is claimed.

## Claims

1. A composition which includes one or more compounds of formula (I): 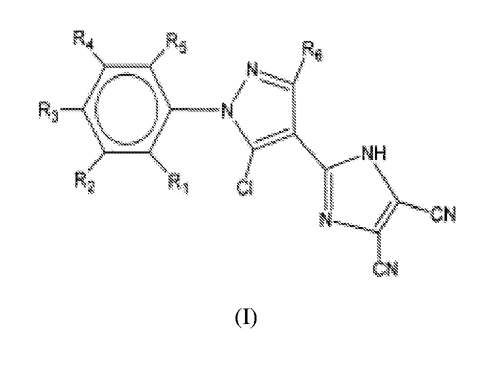 Wherein:
- R₁ to R₅ represent separately hydrogen, halogen or a -(X)ₙ-R₇ radical, wherein X represents a group selected among oxygen, sulfur, sulfinyl or sulfonyl radical, n is 0 or 1 and R₇ is an alkyl C₁-C₄ radical.
- R₆ represents an alkyl C₁-C₆ radical.
And wherein:
- alkyl C₁-C4 is linear or branched alkyl, saturated o unsaturated, with 1 to 4 carbon atoms which in turn may be replaced by one or more equal or different halogen atoms.
- alkyl C₁-C₆ is linear or branched alkyl, saturated o unsaturated, with 1 to 4 carbon atoms which in turn may be replaced by one or more equal or different halogen atoms.
- Halogen is fluorine, chlorine, bromine or iodine.
With one or more associated pesticide compounds, selected from macrocyclic lactones, neonicotinoids, IGR, piretroids, pyrimidines, organophosphates or amitraz.

2. The composition claimed in 1 **characterized by** a compound of formula (I) as:
5-chlorine-1-(2,6-dichlorine-4-trifluoromethylphenyl)-4-(4,5-dicyan-1H-imidazol-2-il)-3-isopropyl-1H-pyrazole.
5-chlorine-1-(2,6-dichlorine-4-trifluoromethylphenyl)-4-(4,5-dicyan-1H-imidazol-2-il)-3-ethyl-1H-pyrazole.
5-chlorine-1-(2, 6-dichlorine-4-trifluoromethylphenyl)-4-(4,5-dicyan-1H-imidazol-2-il)-3-tercibutyl- 1H-pyrazole.

3. The composition claimed in 1 **characterized by** a compound of formula (I) as: 5-chlorine-1-(2, 6-dichlorine-4-trifluoromethylphenyl)-4-(4,5-dicyan-1H-imidazol-2-il)-3-methyl-1H-pyrazole.

4. A composition claimed in 1, wherein the compound is associated to one or more of: nitenpiram, imidacloprid, moxidectine, milbecine, selamectine, ivermectine, lufenuron, spinosad.

5. A composition as claimed in 1, wherein there is one or more compounds of formula (I), one or more neonicotinoids, one or more macrocyclic lactones and one or more IGR.

6. A composition according to claim 1, wherein the same is suitable for oral, topical or parenteral administration.

7. A composition according to claim 6, wherein it is formulated to be applied as pour on, spot on, wetting powders, insoluble powders, ointments, aerosols.

8. A composition claimed in 6, wherein it is formulated as injection composition.

9. A composition as claimed in 6, wherein it is formulated as drinkable composition, pre-mixture to be used as food, gels, cookies or drops.

10. A composition claimed in 6, wherein it is formulated as granulates, tablets or capsules.

11. An animal food **characterized by** being filled with a composition of claim 1.

12. A collar or earring to be used by a mammal, **characterized by** being impregnated with a composition of claim 1.

13. A composition claimed in 1, **characterized by** being formulated as spray or powders.

14. A kit **characterized by** containing in separate containers compounds of formula (I) and associated compounds, to be mixed upon use.

15. A composition as claimed in 1, wherein it is applied in the treatment of insects, arachnida and worms in mammals.

16. The composition claimed in 15, wherein the insects and arachnida are one ore more fleas, ticks, flies or mosquitoes.

17. The composition claimed in 15 or 16, wherein the mammal is a cat or dog.

18. The collar or earring claimed in 12, wherein the mammal is a cat or dog.

19. The elimination method of insects, arachnida or worms, in the area where the mammal is usually found, wherein the formulation used is the one claimed in 13.

20. The method claimed in 19, wherein the insects and arachnida are one or more fleas, ticks, flies or mosquitoes.

21. A treatment method of a mammal against insects, arachnida or worms, wherein a composition according to claim 1 is used.

22. The treatment method claimed in 21, wherein the insects and arachnida are one or more fleas, ticks, flies or mosquitoes.

23. The treatment method claimed in 21, wherein the compounds of formula (I) and associated compounds are administered in doses which reach together 0.01 to 800 mg/kg of body weight of the animal.

24. The treatment method claimed in 23, wherein the total amount of compounds of formula (I) is 1-32 mg/kg and the total amount of associated compounds is 1-100 mg/kg when the associated compound is one or more of neonicotinoids, 0.5 mcg/kg to 40 mg/kg when it is one or more macrocyclic lactones (except Spinosad), 2-40 mg/kg when it is one or more IGR, 1-100 mg/kg when it is one or more piretroids or one or more pyrimidines or amitraz and 1-100 mg/kg when it is Spinosad.

25. The treatment method claimed in 23, wherein the total amount of compounds of formula (I) is 2-60mg/kg and the total amount of associated compounds is 2-200mg/kg when the associated compound is one or more of neonicotinoids, 5 mcg/kg to 60 mg/kg when it is one or more macrocyclic lactones (except Spinosad), 4-80mg/kg when it is one or more IGR, 2-160mg/kg when it is one or more piretroids or one or more pyrimidines or amitraz and 5-200mg/kg when it is Spinosad.

26. The treatment method of claim 23, **characterized by** the use in topical form of a compound or compounds of formula (I) in a total amount of 1-32 mg/kg with a pesticide or organophosphate pesticides in total amount of 0,5-20 mg/kg.

27. The method as claimed in 19-22, wherein the mammal is a cat or dog.

28. The method claimed in 23-26, wherein the insects and arachnida are one or more fleas, ticks, flies or mosquitoes.

29. The method as claimed in 23-26, wherein the mammal is a cat or dog.

30. The method claimed in 29, wherein the insects and arachnida are one or more fleas, ticks, flies or mosquitoes.
